# FASCICULE DE BREVET EUROPEEN

(11) **EP 1 762 470 B1**
(45) Date de publication et mention de la délivrance du brevet: **11.07.2012**
(21) Numéro de dépôt: 06300914.6
(22) Date de dépôt: 01.09.2006
(51) Int. Cl.: B62D 25/16, B62D 25/18, B60K 11/08

(54) **Aile de véhicule automobile**
Kraftfahrzeug Kotflügel
Vehicle fender

(30) Priorité: 13.09.2005 FR 0552757
(43) Date de publication de la demande: 14.03.2007
(73) Titulaire: Renault s.a.s., 92100 Boulogne Billancourt (FR)
(72) Inventeur: Sueur, Eric, 77400, Lagny sur Marne (FR); Leduc, François, 92140, Clamart (FR); Grosdidier, François, 91620, La Ville du Bois (FR)

(56) Documents cités:
- FR-A- 1 023 124
- JP-A- 2001 278 123
- JP-A- 2004 255 956

## Description

La présente invention concerne une aile de véhicule automobile et plus particulièrement une aile comportant une ouverture apte à permettre une extraction d'air, et comportant en outre des premiers moyens de fixation solidaires de l'aile et aptes à permettre la fixation d'un élément d'obturation venant recouvrir l'ouverture formée dans l'aile.

Une aile de véhicule automobile et son procédé d'obtention tels que décrits respectivement par le préambule des revendications 1 et 4 sont connus du document JP-A-2004 255 956.

Une telle architecture d'aile avant peut poser des problèmes d'accessibilité pour positionner l'élément d'obturation au montage, ainsi que des difficultés pour intégrer une zone technique sur l'aile permettant la fixation de l'élément d'obturation par rapport à l'aile.

Un des objectifs de l'invention est donc de proposer un agencement d'aile qui permette le montage aisé d'un extracteur d'air sur une aile, sans laisser de fixations apparentes, et qui autorise en outre un démontage en après vente.

En réponse à des objectifs que l'on retrouve invariablement chez les différents constructeurs automobiles, la présente invention se veut également peu coûteuse et peu encombrante.

Pour répondre à ces objectifs, l'invention propose une aile telle que décrite précédemment, caractérisé en ce que les premiers moyens de fixation sont venus de matière avec l'aile et sont en saillie avec la face intérieure de l'aile.

Selon différentes caractéristiques de la présente invention :
- les premiers moyens de fixation sont situés à l'extrémité libre de parois de dégagement situées en saillie de la face intérieure de l'aile.
- les premiers moyens de fixation sont positionnés régulièrement sur le pourtour de l'ouverture.
- les premiers moyens de fixation sont des pions sensiblement cylindriques.

L'invention concerne également un agencement d'une aile de véhicule automobile dans lequel l'ouverture formée sur l'aile est fermée par un élément d'obturation présentant des orifices aptes à permettre une extraction d'air, caractérisée en ce que les premiers moyens de fixation sont venus de matière avec l'intérieur de l'aile et en ce que l'élément d'obturation est fixé sur l'aile par l'intermédiaire des premiers moyens de fixation solidaires de l'aile.

Selon différentes caractéristiques de l'invention, des seconds moyens de fixation coopèrent avec les premiers moyens de fixation pour fixer l'élément d'obturation. Ces seconds moyens de fixation peuvent être des rondelles auto serrantes.

L'invention concerne également un procédé d'obtention d'un agencement d'aile de véhicule automobile, dans lequel l'élément d'obturation est dans une première étape positionné sur les premiers moyens de fixation disposé à l'intérieur de l'aile, les seconds moyens de fixation étant dans un deuxième temps amenés au contact des premiers moyens de fixation en serrant l'élément d'obturation contre les premiers moyens de fixation.

Selon une caractéristique de l'invention, l'élément d'obturation est amené sur les premiers moyens de fixation depuis l'intérieur du véhicule, et les seconds moyens de fixation sont montés depuis l'extérieur du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'une aile avant gauche de véhicule automobile, du type comportant une aile et un agencement d'aile selon un premier mode de réalisation de l' invention ;
- la figure 2 est une représentation d'une aile de véhicule, du côté de sa face intérieure ;

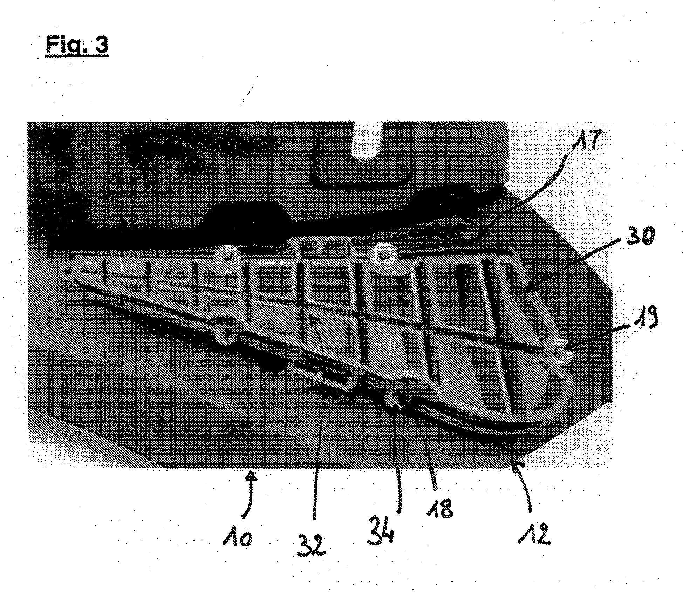

- la figure 3 est une représentation d'un agencement d'aile selon l'invention, comprenant l'aile de la figure 2 ;
- la figure 4 est une représentation de l'élément d'obturation présent dans l'agencement d'aile de la figure 3 ;
- la figure 5 est une vue en coupe de l'aile, de premiers et seconds moyens de fixation, et d'un élément d'obturation formant un agencement selon l'invention.

Selon la présente invention, une aile 10 de véhicule automobile est formée d'une pièce moulée dans laquelle une première face extérieure 12 est orientée vers l'extérieur du véhicule lorsque l'aile 10 est en position sur la caisse du véhicule, et dans laquelle une seconde face intérieure 14 est orientée vers le bloc moteur lorsque l'aile 10 est dans cette même position. L'aile 10 présente un dégagement 16 cylindrique orienté vers l'intérieur de l'aile, de sorte que des parois de dégagement 17 sont en saillie par rapport à la seconde face intérieure 14. Le dégagement 16 est débouchant de sorte qu'une ouverture 20 est générée à l'intérieur de l'aile 10. A titre d'exemple sur les figures, les parois de dégagement 17 sont disposées de sorte que l'ouverture 20 formée par leur extrémité libre présente une forme de trapèze.

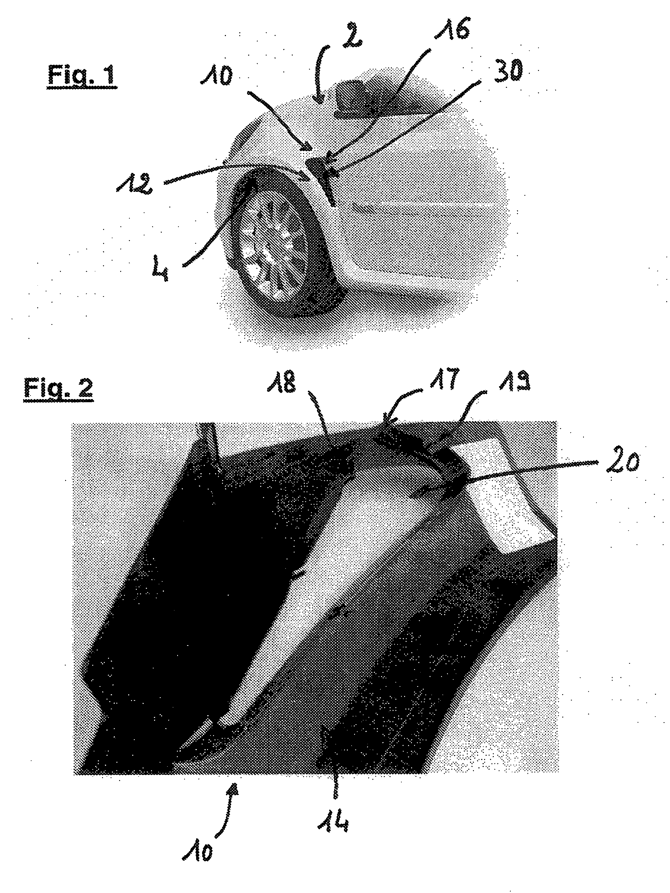

Telle que représentée à la figure 1, une aile avant 10 de véhicule automobile est munie d'une ouverture 20 permettant le passage d'air entre la zone 2 renfermant le bloc moteur, et l'extérieur du véhicule. Une telle ouverture 20, nécessaire pour assurer le refroidissement du moteur, est en outre munie d'un élément d'obturation 30 qui permet de sécuriser l'accès vers la zone 2 du bloc moteur, tout en permettant d'autre part le passage de l'air. Les sorties d'air aux ailes permettent de neutraliser la turbulence aérodynamique crée derrière la zone d'élargissement de l'aile, en recollant les filets d'air. A titre d'exemple, une grille d'extraction d'air 32 est positionnée à cet effet devant l'ouverture 20 réalisée dans l'aile 10. L'orientation des ailettes 33 formant la grille 32 permet de diriger le flux d'air en sortie. La structure de l'élément d'obturation 30 telle que représentée sur les figures permet ainsi d'orienter le flux d'air horizontalement vers l'extérieur du véhicule.

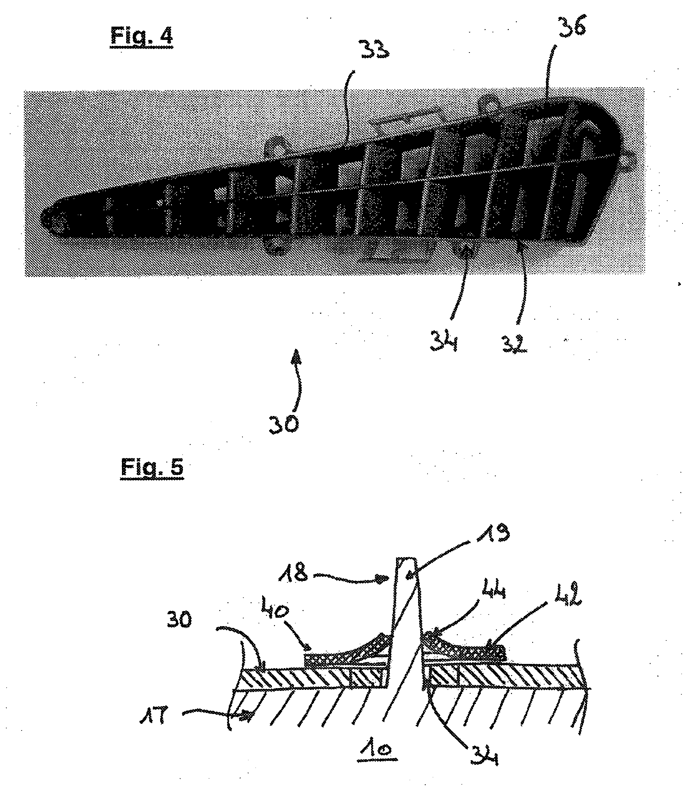

Les figures, et notamment la figure 4, décrivent et représentent une grille d'extraction d'air 32 formant un élément d'obturation 30 selon un mode de réalisation de l'invention. La grille d'extraction 32 est formée d'une pièce plastique dont le contour présente une forme complémentaire de celle de l'ouverture 20 réalisée dans l'aile 10. A titre d'exemple, la grille 32 présente sensiblement une forme en trapèze, sur le pourtour duquel des trous de guidage 34 sont réalisés. La dimension de ces trous de guidage 34 permet de guider la grille 32 par le coulissement de premiers moyens de fixation 18 solidaires de l'aile 10 dans les trous de guidage 34. Le nombre des trous de guidage 34 présents sur le pourtour de la grille 32 est équivalent au nombre des premiers moyens de fixation 18 disposés sur l'aile 10. Des nervures 36 quadrillent l'intérieur de la grille 32 et forment des ailettes 33, dont l'orientation est déterminée en fonction de la position de montage de la grille 32, de sorte que ces ailettes 33 permettent d'orienter le flux d'air horizontalement vers l'extérieur du véhicule. Il sera compris que les trous de guidage 34 peuvent être formés sur des éléments d'obturation 30 autres qu'une grille 32.

Selon l'invention, l'élément d'obturation 30 est fixé à l'intérieur de l'aile 10 par l'intermédiaire de premiers moyens de fixation 18 venus de matière avec l'aile 10. Ces premiers moyens de fixation 18 présentent à titre d'exemple la forme de pions 19 sensiblement cylindriques sur lesquels s'enfilent les trous de guidage 34 formés sur l'élément d'obturation 30. Il sera compris que les premiers moyens de fixation 18 peuvent prendre d'autres formes qui leur permettraient d'assurer la mise en position de l'élément d'obturation 30 en regard de l'ouverture 20. Tel que représenté, les premiers moyens de fixation 18 sont venus de matière sur l'ensemble du pourtour de l'ouverture 20 de l'aile 10. L'ouverture 20 présente dans l'aile 10 est obtenue par démoulage lors de la fabrication de l'aile 10. Il en découle vers l'intérieur de l'aile 10 des parois de dégagement 17 qui entourent l'ouverture 20 et qui s'étendent radialement depuis la seconde face intérieure 14 de l'aile, vers l'intérieur du véhicule. L'épaisseur des parois de dégagement 17 est limitée car une trop grand épaisseur de ces parois 17 entraînerait un risque de marquage de l'aspect extérieur de l'aile 10. L'orientation des pions 19 sensiblement cylindriques, orientés dans la même direction que la direction du démoulage et des parois de dégagement 17 entourant l'ouverture 20, permet un démoulage des pions 19 dans la continuité du démoulage de l'ouverture 20. Le nombre des pions 19 formant ces premiers moyens de fixation 18, qui prolongent les parois de dégagement 17, peut varier selon les dimensions de l'ouverture 20 et de l'élément d'obturation 30.

D'autre part, l'élément d'obturation 30 est par la suite bloqué en position entre les premiers moyens de fixation 18 solidaires de l'aile 10 et des seconds moyens de fixation 40 aptes à coopérer avec les premiers moyens de fixation 18. A titre d'exemple, les seconds moyens de fixation 40 présentent la forme de rondelles auto serrantes 42, dont un exemple est représenté en position de serrage à la figure 5. La déformation des pattes élastiques 44 de la rondelle 42 contre le pion sensiblement cylindrique 19, qui a lieu lors du serrage de la rondelle 42 contre l'élément d'obturation 30, empêche par la suite un desserrage de la fixation. Ces seconds moyens de fixation 40 sont montés sur l'aile 10 depuis l'intérieur du véhicule, ce qui a pour effet de proposer une aile 10 de véhicule automobile et une grille d'extraction d'air 32 associée sans moyens de fixation 18, 40 apparents. Le montage d'une telle aile 10, réalisé par l'intérieur du véhicule en passant le bras par le passage de roue 4, est facilité par l'utilisation de premiers 18 et seconds 40 moyens de fixation ne nécessitant pas d'outillage encombrant. Dans un premier temps, l'élément d'obturation 30 peut être guidée par la coopération des trous de guidage 34 formés dans l'élément d'obturation 30 avec les pions 19 démoulés sur l'aile 10, et dans un deuxième temps, un outil à embout aimanté peut être facilement utilisé pour guider les rondelles auto serrantes 42 autour de chaque pion correspondant 19. Contrairement à d'autres solutions de fixation irréversible, l'élément d'obturation peut être démonté en après vente.

L'invention telle que décrite permet un montage aisé de l'élément d'obturation 30 sur l'aile 10 du véhicule, avec un outillage simplifié. La fixation de l'élément d'obturation 30 par l'intérieur du véhicule permet d'obtenir une très bonne qualité perçue de l'agencement aile/élément d'obturation. Il n'est pas en effet nécessaire de prévoir une dimension de l'élément d'obturation 30 inférieure à l'ouverture 20 pour permettre le passage de cet élément d'obturation 30. Il sera compris toutefois que, si aucun jeu de dimensionnement n'est nécessaire entre l'ouverture 20 et l'élément d'obturation 30, les pions 19 et les trous de guidage 34 peuvent présenter des jeux de fonctionnement pour permettre un ajustement de la position de la grille 32 au montage par rapport à l'aile 10, les rondelles 42 venant par la suite bloquer la position de la grille 32 par rapport à l'ouverture 20 de l'aile 10.

## Revendications

1. Aile de véhicule automobile (0) du type comportant une ouverture (20) apte à permettre une extraction d'air, et comportant en outre des premiers moyens de fixation (18) solidaires de l'aile (10) et aptes à permettre la fixation d'un élément d'obturation (30) venant recouvrir l'ouverture (20) formée dans l'aile (10), dans laquelle les premiers moyens de fixation (18) sont venus de matière avec l'aile (10) et sont en saillie avec la face intérieure (14) de l'aile (10), **caractérisée en ce que** les premiers moyens de fixation (18) sont des pions (19) sensiblement cylindriques.

2. Aile selon la revendication 1, **caractérisée en ce que** les premiers moyens de fixation (18) sont situés à l'extrémité libre de parois de dégagement (17) situées en saillie de la face intérieure (14) de l'aile (10).

3. Aile selon la revendication 1 ou 2, **caractérisée en ce que** les premiers moyens de fixation (18) sont positionnés à intervalles réguliers sur le pourtour de l'ouverture (20).

4. Procédé d'obtention d'une aile de véhicule automobile, dans lequel un élément d'obturation (30) vient en regard d'une ouverture (20) formée sur l'aile (10), l'élément d'obturation (30) étant dans une première étape positionné sur des premiers moyens de fixation (18) disposés en saillie de la face intérieure (14) de l'aile (10), des seconds moyens de fixation (40) étant dans un deuxième temps amenés au contact des premiers moyens de fixation (18) en serrant l'élément d'obturation (30) contre les premiers moyens de fixation (18), **caractérisé en ce que** les premiers moyens de fixation (18) sont des pions (19) sensiblement cylindriques.

5. Procédé selon la revendication précédente, **caractérisé en ce que** les seconds moyens de fixation (40) sont des rondelles auto serrantes (42).

6. Procédé selon l'une des revendications 4 et 5, **caractérisé en ce que** l'élément d'obturation (30) est amené sur les premiers moyens de fixation (18) depuis l'intérieur du véhicule, et **en ce que** les seconds moyens de fixation (40) sont également montés depuis l'intérieur du véhicule.

## Claims

1. Motor vehicle wing (10) of the type including an opening (20) able to allow air extraction, and also including primary fastening means (18) integral with the wing (10) and able to allow the fastening of an obturating element (30) covering the opening (20) made in the wing (10), in which the primary fastening means (18) are made in one piece with the wing (10) and project from the inner face (14) of the wing (10), **characterized in that** the primary fastening means (18) are generally cylindrical pegs (19).

2. Wing according to Claim 1, **characterized in that** the primary fastening means (18) are located at the free end of passage walls (17) projecting from the inner face (14) of the wing (10).

3. Wing according to Claim 1 or 2, **characterized in that** the primary fastening means (18) are positioned at regular intervals around the opening (20).

4. Method for obtaining a motor vehicle wing, in which an obturating element (30) is facing an opening (20) made in the wing (10), the obturating element (30) being initially positioned on primary fastening means (18) projecting from the inner face (14) of the wing (10), secondary fastening means (40) being subsequently brought into contact with the primary fastening means (18) by tightening the obturating element (30) against the primary fastening means (18), **characterized in that** the primary fastening means (18) are generally cylindrical pegs (19).

5. Method according to the previous claim, **characterized in that** the secondary fastening means (40) are self-locking washers (42).

6. Method according to either of Claims 4 and 5, **characterized in that** the obturating element (30) is brought over the primary fastening means (18) from inside the vehicle, and **in that** the secondary fastening means (40) are also fitted from inside the vehicle.

## Patentansprüche

1. Kraftfahrzeug-Kotflügel (10) von der Art, die eine Öffnung (20) aufweist, welche eine Luftentnahme erlauben kann, und die außerdem erste Befestigungseinrichtungen (18) aufweist, die fest mit dem Kotflügel (10) verbunden und in der Lage sind, die Befestigung eines Verschlusselements (30) zu erlauben, das die im Kotflügel (10) geformte Öffnung (20) bedeckt, wobei die ersten Befestigungseinrichtungen (18) aus einem Stück mit dem Kotflügel (10) bestehen und mit der Innenseite (14) des Kotflügels (10) vorstehen, **dadurch gekennzeichnet, dass** die ersten Befestigungseinrichtungen (18) im Wesentlichen zylindrische Zapfen (19) sind.

2. Kotflügel nach Anspruch 1, **dadurch gekennzeichnet, dass** die ersten Befestigungseinrichtungen (18) sich am freien Ende von Freisetzungswänden (17) befinden, die sich von der Innenseite (14) des Kotflügels (10) vorspringend befinden.

3. Kotflügel nach Anspruch 1 oder 2, **dadurch gekennzeichnet, dass** die ersten Befestigungseinrichtungen (18) in regelmäßigen Abständen auf dem Umriss der Öffnung (20) positioniert sind.

4. Verfahren zum Erhalt eines Kraftfahrzeug-Kotflügels, bei dem ein Verschlusselement (30) vor eine auf dem Kotflügel (10) geformte Öffnung (20) kommt, wobei das Verschlusselement (30) in einem ersten Schritt auf ersten Befestigungseinrichtungen (18) positioniert wird, die von der Innenseite (14) des Kotflügels (10) vorstehend angeordnet sind, wobei zweite Befestigungseinrichtungen (40) anschließend mit den ersten Befestigungseinrichtungen (18) in Kontakt gebracht werden, indem das Verschlusselement (30) gegen die ersten Befestigungseinrichtungen (18) gepresst wird, **dadurch gekennzeichnet, dass** die ersten Befestigungseinrichtungen (18) im Wesentlichen zylindrische Zapfen (19) sind.

5. Verfahren nach dem vorhergehenden Anspruch, **dadurch gekennzeichnet, dass** die zweiten Befestigungseinrichtungen (40) selbstklemmende Unterlegscheiben (42) sind.

6. Verfahren nach einem der Ansprüche 4 und 5, **dadurch gekennzeichnet, dass** das Verschlusselement (30) von innerhalb des Fahrzeugs auf die ersten Befestigungseinrichtungen (18) gebracht wird, und dass die zweiten Befestigungseinrichtungen (40) ebenfalls von innerhalb des Fahrzeugs montiert werden.
